# EUROPÄISCHE PATENTSCHRIFT

(11) **EP 3 728 135 B1**
(45) Veröffentlichungstag und Bekanntmachung des Hinweises auf die Patenterteilung: **09.04.2025**
(21) Anmeldenummer: 18826688.6
(22) Anmeldetag: 20.12.2018
(51) Int. Cl.: C02F 1/00, B01D 35/143, C02F 1/28, C02F 1/42

(54) **TISCHWASSERFILTER MIT EINER WECHSELANZEIGE**
TABLE WATER FILTERING DEVICE WITH A CHANGE DISPLAY
CARAFE FILTRANTE POURVUE D'UN INDICATEUR DE CHANGEMENT

(30) Priorität: 21.12.2017 DE 102017130856
(43) Veröffentlichungstag der Anmeldung: 28.10.2020
(73) Patentinhaber: BWT Holding GmbH, 5310 Mondsee (AT)
(72) Erfinder: ROHDE, Florian, 65191 Wiesbaden (DE)
(74) Vertreter: Friderichs, Gunther
(86) Internationale Anmeldenummer: PCT/EP2018/086399
(87) Internationale Veröffentlichungsnummer: WO 2019/122240

(56) Entgegenhaltungen:
- WO-A1-2007/133834
- WO-A1-2009/090678
- WO-A1-2013/105018
- WO-A2-2011/117078
- DE-A1- 102015 120 821

## Beschreibung

### Gebiet der Erfindung

Die Erfindung betrifft einen Tischwasserfilter mit einer Wechselanzeige. Über die Wechselanzeige wird das Erreichen des Endes der Nutzungsdauer einer Filterkartusche für einen Tischwasserfilter signalisiert.

### Hintergrund der Erfindung

Tischwasserfilter mit einer Wechselanzeige, die einen notwendigen Austausch der Filterkartusche signalisiert, sind bekannt. Aus der Praxis bekannte Tischwasserfilter umfassen in der Regel einen Wassersammelbehälter, welcher insbesondere als Kanne ausgebildet ist. In den Wassersammelbehälter kann ein Trichter eingesetzt werden, in welchen eine Filterkartusche dichtend eingesetzt wird. Das Wasser durchläuft schwerkraftbetrieben die Filterkartusche, welche einen Ionenaustauschmaterial, Aktivkohle und/oder mechanische Filtermedien zur Entfernung von Schwebstoffen enthalten kann.

Die Filterkartusche muss regelmäßig ausgetauscht werden. Ein regelmäßiger Austausch ist nicht nur erforderlich, da sich das Filtermedium, beispielsweise das Ionenaustauschermaterial, erschöpft, sondern es ist auch aus hygienischen Gründen ein regelmäßiger Austausch nötig. Bei vielen auf dem Markt befindlichen Systemen haben sich zeitbasierte Wechselanzeigen durchgesetzt, d.h. der Nutzer wird nach Ablauf einer vorgegebenen Zeitspanne aufgefordert, die Filterkartusche auszutauschen und die Wechselanzeige zurückzusetzen.

Üblich sind Wechselanzeigen beispielsweise in Form eines LCD-Displays am Deckel des als Kanne ausgebildeten Wassersammelbehälters. Dies hat den Nachteil, dass es so meist nicht möglich ist, den Deckel derart auszugestalten, dass dieser spülmaschinenfest ist.

Die Offenlegungsschrift DE 10 2015 120 821 A1 (Erfinder Dr. Jürgen Johann, Markus Pichler) schlägt daher in einer dort beschriebenen Ausführungsform vor, die Wechselanzeige als Sockel auszugestalten, auf welchen der Wassersammelbehälter aufgesetzt wird. Dies hat den Vorteil, dass der Wassersammelbehälter getrennt von der Wechselanzeige gereinigt werden kann, insbesondere in eine Spülmaschine verbracht werden kann.

Auch das Dokument WO 2007/133834 A1 zeigt eine Kanne, die auf einen Sockel mit einer Wechselanzeige aufsetzbar ist.

### Aufgabe der Erfindung

Vor diesem Hintergrund liegt der Erfindung die Aufgabe zugrunde, einen Tischwasserfilter mit einer Wechselanzeige bereitzustellen, welcher für den Benutzer noch komfortabler und praktischer ist.

### Zusammenfassung der Erfindung

Die Aufgabe der Erfindung wird bereits durch einen Tischwasserfilter nach Anspruch 1 gelöst.

Bevorzugte Ausführungsformen und Weiterbildungen der Erfindung sind dem Gegenstand der abhängigen Ansprüche, der Beschreibung sowie den Zeichnungen zu entnehmen.

Die Erfindung betrifft einen Tischwasserfilter. Dieser umfasst einen Wassersammelbehälter, eine Filterkartusche sowie eine Wechselanzeige.

Unter einem Tischwasserfilter wird eine mobile, insbesondere als Kanne ausgebildete Vorrichtung verstanden, in welcher sich das aufbereitete Wasser sammelt. Die Filterkartusche kann insbesondere mit einem dichtenden Rand in einen Trichter eingesetzt werden, in welchen das aufzubereitende Wasser eingefüllt wird und sodann die Filterkartusche passiert. Die Filterkartusche enthält in der Regel zumindest einen Ionenaustauschermaterial. In anderen Ausführungsvarianten kann die Filterkartusche aber auch allein der Reinigung des Wassers dienen und lediglich Filter zur Entfernung von Schwebstoffen und/oder Aktivkohle enthalten.

Unter einer Wechselanzeige wird eine Vorrichtung verstanden, welche dem Nutzer einen notwendigen Kartuschenaustausch signalisiert. Dies erfolgt insbesondere optisch. Die Anzeige eines notwendigen Austauschs der Filterkartusche erfolgt insbesondere zeitbasiert. Hierzu ist die Wechselanzeige mit einem Timer versehen, welcher nach dem Rücksetzen der Wechselanzeige nach einer vorbestimmten Zeit (also beispielsweise nach vier Wochen) einen notwendigen Filteraustausch signalisiert.

Neben einer Zeitmessung können aber noch andere Kriterien in die Bestimmung der Lebensdauer der Filterkartusche eingehen. So kann die Wechselanzeige beispielsweise auch einen Temperatursensor umfassen und kann so die Lebensdauer der Filterkartusche verlängern, wenn der Tischwasserfilter überwiegend im Kühlschrank aufbewahrt wird. Weiter ist auch denkbar, mittels eines integrierten Beschleunigungssensors darauf rückzuschließen, ob und wie häufig der Tischwasserfilter verwendet wurde, was ebenfalls in die Berechnung der Lebensdauer der Filterkartusche einfließen kann.

Gemäß der Erfindung ist die Wechselanzeige lösbar am Boden des Wassersammelbehälters befestigt.

Die Wechselanzeige ist also als abnehmbares Modul ausgebildet, welches im angebrachten Zustand fest mit dem Wassersammelbehälter verbunden ist, vom Benutzer aber, vorzugsweise werkzeuglos, abgenommen werden kann.

So kann die Wechselanzeige leicht entfernt werden, um den Wassersammelbehälter beispielsweise in einer Spülmaschine zu reinigen. Gleichzeitig ist ansonsten die Wechselanzeige fester Bestandteil des Tischwasserfilters, so dass es beispielsweise nicht notwendig ist, den Tischwasserfilter nach jeder Benutzung auf die als Sockel ausgebildete Wechselanzeige aufzusetzen.

Es ist insbesondere vorgesehen, dass die Wechselanzeige am Boden des Wassersammelbehälters festgeklemmt ist und so vom Benutzer mit den Fingern herausgezogen werden kann.

Bei einer Weiterbildung der Erfindung ist die Wechselanzeige derart ausgebildet, dass sie nur im gelösten Zustand rücksetzbar ist. Die Rücksetzmittel, insbesondere ein Knopf oder eine Fläche, auf welche der Benutzer drücken muss, um die Wechselanzeige zurückzusetzen, ist hierfür vorzugsweise angrenzend an den Boden des Wassersammelbehälters angeordnet.

So kann der Benutzer die Wechselanzeige nur zurücksetzen, wenn diese herausgenommen wird. Die Gefahr von Fehlbetätigungen, beispielsweise durch Kinder, wird so reduziert.

Erfindungsgemäß ist die Wechselanzeige in den Boden des Wassersammelbehälters eingeklipst.

Es ist insbesondere vorgesehen, dass die Wechselanzeige ein Bajonette-Verschluss umfasst, mit welchem diese in den Boden des Wassersammelbehälters eingedreht wird und dort verdrehsicher verrastet. So ist ein einfaches Anbringen und Wiederabnehmen der Wechselanzeige gewährleistet.

Vorzugsweise umfasst die Wechselanzeige ein Fenster, aus welchem Licht in den Wassersammelbehälter emittiert wird. Die Wechselanzeige emittiert also insbesondere durch ein Fenster und durch den Boden des Wassersammelbehälters Licht, wobei vorzugsweise anhand des Wechsels einer Lichtfarbe ein notwendiger Austausch der Filterkartusche signalisiert wird.

Bei einer Ausführungsform der Erfindung ist das Fenster als Schalter zum Rücksetzen der Wechselanzeige ausgebildet.

Das Fenster ist insbesondere als Druckschalter ausgebildet, durch den die vorzugsweise zeitgesteuerte Wechselanzeige rückgesetzt wird.

Da vorzugsweise das Fenster angrenzend zum Boden angeordnet ist, also durch den Boden Licht in den Wassersammelbehälter emittiert, ist dieses nur im abgenommenen Zustand zugänglich. So ist gewährleistet, dass die Wechselanzeige nicht versehentlich rückgesetzt wird. Vielmehr muss die Wechselanzeige zum Rücksetzen abgenommen werden, damit das Fenster zugänglich ist.

Bei einer weiteren Ausführungsform der Erfindung weist der Boden des Wassersammelbehälters eine Einsenkung auf, in welche die Wechselanzeige zumindest abschnittsweise hineinragt.

Insbesondere, wenn die Wechselanzeige den notwendigen Filteraustausch optisch signalisiert, ist hierdurch eine verbesserte Lesbarkeit der Wechselanzeige sichergestellt.

Weiter kann ein Elektronikmodul der Wechselanzeige zumindest abschnittsweise in die Einsenkung hineinragen. So lässt sich eine besonders kompakte Ausgestaltung des Tischwasserfilters erzielen. Es ist insbesondere möglich, den Boden des Tischwasserfilters flach auszugestalten, da zumindest ein Teil der Wechselanzeige in der Einsenkung untergebracht werden kann.

Die Einsenkung ist vorzugsweise als nach innen gewölbter Abschnitt des Bodens ausgebildet. Bei einer anderen Form kann die Einsenkung aber auch als Ausnehmung ausgebildet sein.

Die Einsenkung kann des Weiteren dem Festlegen, insbesondere dem Festklemmen, der Wechselanzeige dienen. Insbesondere ist gemäß einer Ausführungsform der Erfindung ein Vorsprung der Wechselanzeige in der Einsenkung verklemmbar.

Beispielsweise können Vorsprung der Wechselanzeige und Einsenkung korrespondierende Nuten und Stege aufweisen, über die sich eine sichere Klemmung erzielen lässt.

Auch kann zum Festklemmen ein Vorsprung der Wechselanzeige, welcher in die Einsenkung hineinragt zumindest einen umlaufenden Kragen aufweisen, vorzugsweise aus einem elastischen Material. So ist ggf. eine sichere Klemmung auch ohne dass eine Nut in der Einsenkung vorhanden ist, möglich.

Bei einer Weiterbildung der Erfindung umfasst die Wechselanzeige die Standfläche des Tischwasserfilters.

Es ist insbesondere vorgesehen, dass die Wechselanzeige einen plattenförmigen Abschnitt aufweist, welcher die Standfläche umfasst.

Ein Vorsprung der Wechselanzeige, in welchem zumindest abschnittsweise ein Elektronikmodul der Wechselanzeige angeordnet ist, ragt in eine Einsenkung des Wassersammelbehälters hinein und ist vorzugsweise in der Einsenkung festgeklemmt. Der Benutzer kann den plattenförmigen Abschnitt greifen und die Wechselanzeige auf einfache Weise abnehmen. Hierzu können, insbesondere im Bereich unterhalb des Vorsprungs, Ausnehmungen vorhanden sein, die als Greiflöcher dienen.

Als optische Anzeige ist vorzugsweise eine LED-Anzeige vorgesehen. Die LED-Anzeige ist vorzugsweise in den Innenraum des Wassersammelbehälters gerichtet. Insbesondere kann sich die LED-Anzeige stirnseitig angrenzend zum Boden des Wassersammelbehälters befinden. Insbesondere befindet sich zumindest eine LED stirnseitig an dem Vorsprung der Wechselanzeige.

Bei einer bevorzugten Ausführungsform der Erfindung emittiert die Wechselanzeige Licht in zumindest zwei, vorzugsweise in zumindest drei Farben. So kann permanent signalisiert werden, dass die Wechselanzeige in Betrieb ist.

Beispielsweise kann vorgesehen sein, dass grünes Licht einen noch nicht notwendigen Austausch signalisiert. Sobald sich der notwendige Austausch nähert, kann die Wechselanzeige gelbes Licht emittieren, und, bei einem notwendigen Austausch, rotes Licht zu emittieren. Die Übergänge können dabei auch stufenlos sein.

Als LED kann hierfür insbesondere eine RGB-LED verwendet werden.

Bei einer bevorzugten Ausführungsform der Erfindung umfasst die Wechselanzeige einen Beschleunigungs- bzw.

Bewegungssensor, welcher erfasst, ob der Tischwasserfilter bewegt wird. So wird die Wechselanzeige, insbesondere die zumindest eine LED, nur eingeschaltet, wenn der Benutzer den Tischwasserfilter bewegt hat. So wird die Lebensdauer einer Batterie, mit welcher die Wechselanzeige betrieben wird, verlängert und es kann gleichzeitig eine hellere LED verwendet werden.

Vorzugsweise wird die Wechselanzeige nach einem Bewegen des Tischwasserfilters für einen vorgegebenen Zeitraum eingeschaltet und sodann wieder automatisch abgeschaltet.

Die Wechselanzeige umfasst vorzugsweise ein hermetisch abgedichtetes Gehäuse und/oder ein hermetisch abgedichtetes Elektronikmodul. Es ist aber nicht nötig, dass die Wechselanzeige spülmaschinenfest ausgebildet ist.

Die Erfindung betrifft des Weiteren eine Wechselanzeige für einen Tischwasserfilter, insbesondere für einen Tischwasserfilter, wie er zuvor beschrieben wurde.

Die Wechselanzeige ist in einen Boden eines Wassersammelbehälters eingeklipst. Hierzu kann die Wechselanzeige beispielsweise ein Gehäuse mit einem Bajonette-Verschluss umfassen.

Vorzugsweise umfasst, wie vorstehend beschrieben, die Wechselanzeige ein Fenster, mittels dessen Licht durch den Boden eines Wassersammelbehälters emittiert wird, um so einen notwendigen Austausch der Filterkartusche zu emittieren.

Das Fenster kann insbesondere semitransparent ausgebildet sein. Eine semitransparente Ausgestaltung ermöglicht eine bessere Erkennbarkeit des Fensters unter einem transparenten Boden des Wassersammelbehälters, da dieses aufgrund der semitransparenten Ausgestaltung bereits deutlich als beleuchtete Fläche erkennbar ist.

Die Wechselanzeige umfasst einer weiteren Ausführungsform ein Gehäuse mit einer Grundplatte und einem Vorsprung, wobei der Vorsprung, insbesondere die Stirnseite des Vorsprungs, eine optische Anzeige umfasst.

Die optische Anzeige ist insbesondere als zumindest eine LED ausgebildet. Bei einer bevorzugten Ausführungsform der Erfindung umfasst der Vorsprung eine Rücksetzeinrichtung. Die Wechselanzeige ist so nur im abgenommenen Zustand rücksetzbar.

Bei der Rücksetzeinrichtung kann es sich beispielsweise um eine druckempfindliche Fläche oder um einen Mikroschalter handeln.

Die Wechselanzeige ist vorzugsweise ansonsten, wie bereits im Zusammenhang mit dem Tischwasserfilter beschrieben, ausgebildet. Insbesondere kann die Wechselanzeige auch ein Beschleunigungs- bzw. Bewegungssensor erfassen, über den zumindest eine LED der Wechselanzeige aktiviert wird. Es versteht sich, dass dabei vorzugsweise eine Verzögerungsschaltung vorgesehen ist dahingehend, dass die LED sich nach Aktivierung erst nach einer vorgegebenen Zeitspanne abschaltet.

### Kurzbeschreibung der Zeichnungen

Der Gegenstand der Erfindung soll im Folgenden bezugnehmend auf ein in den Zeichnungen Fig. 1 bis Fig. 14 dargestelltes Ausführungsbeispiel näher erläutert werden.
Fig. 1 und Fig. 2 sind perspektivische Ansichten eines erfindungsgemäßen Tischwasserfilters.
Fig. 3 ist eine Schnittansicht des Tischwasserfilters.
Fig. 4 ist eine Detaildarstellung der Fig. 3.
Fig. 5 ist eine perspektivische Ansicht der Wechselanzeige.
Fig. 6 und Fig. 7 zeigen Details der Wechselanzeige, wobei einzelne Gehäusebestandteile ausgeblendet sind.
Fig. 8 zeigt in einer perspektivischen Ansicht das in der Wechselanzeige vorhandene Elektronikmodul.

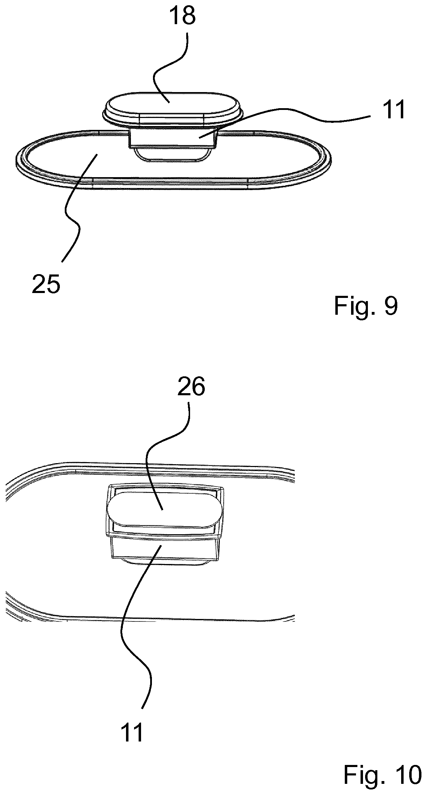

Bezugnehmend auf Fig. 9 und Fig. 10 soll das Rücksetzen der Wechselanzeige näher erläutert werden.

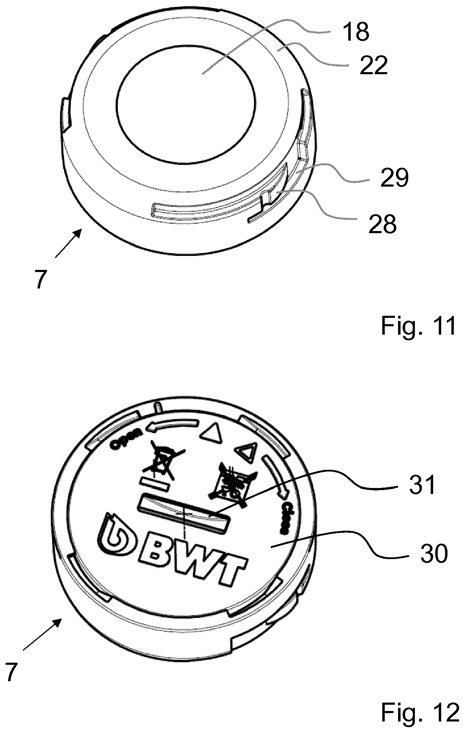

Bezugnehmend auf Fig. 11 bis Fig. 14 soll ein weiteres Ausführungsbeispiel einer erfindungsgemäßen Wechselanzeige näher erläutert werden.

Fig. 11 und Fig. 12 sind perspektivische Ansichten der Wechselanzeige.

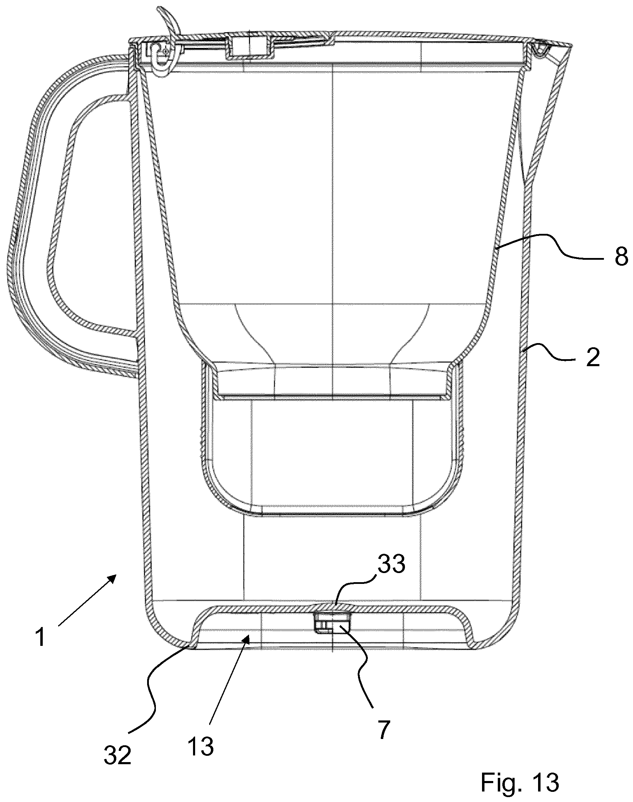

Fig. 13 ist eine Schnittansicht eines Wassersammelbehälters, welcher mit der in Fig. 11 und Fig. 12 gezeigten Wechselanzeige bestückt ist.

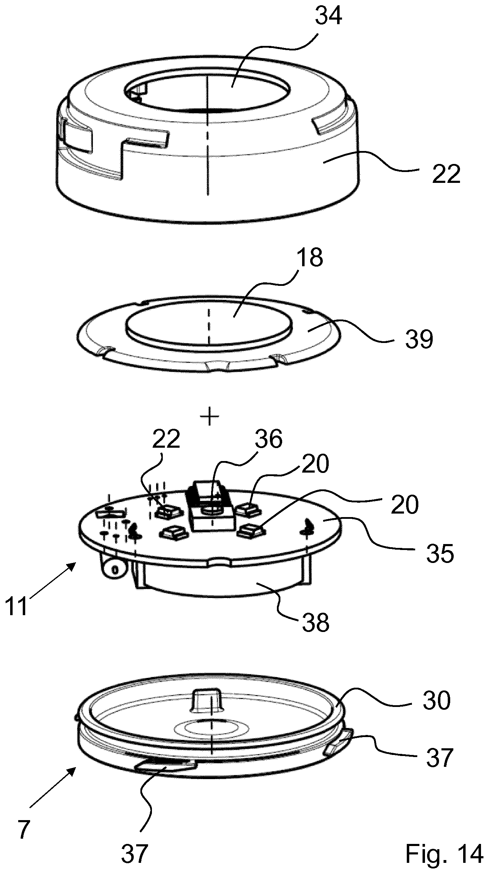

Fig. 14 ist eine Explosionsdarstellung der Wechselanzeige.

### Detaillierte Beschreibung der Zeichnungen

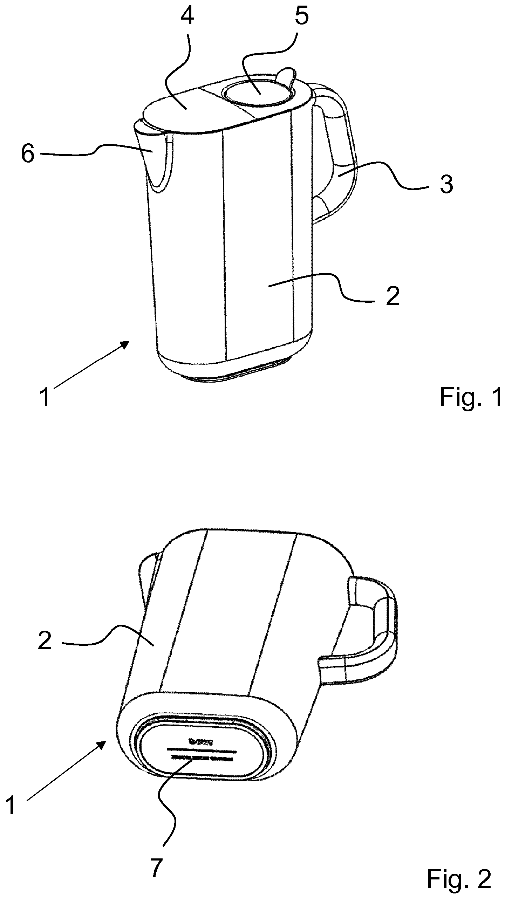

Fig. 1 ist eine perspektivische Ansicht eines Ausführungsbeispiels eines erfindungsgemäßen Tischwasserfilters 1.

Der Tischwasserfilter 1 umfasst in diesem Ausführungsbeispiel einen als Kanne ausgebildeten Wassersammelbehälter 2.

Der Wassersammelbehälter 2 umfasst einen Griff 3 sowie einen Deckel 4 mit einer Einfüllöffnung, welcher mit einer Klappe 5 verschlossen werden kann.

Weiter umfasst der Wassersammelbehälter 2 eine Ausgießtülle 6.

Fig. 2 ist eine weitere perspektivische Ansicht des Tischwasserfilters 1.

In dieser Ansicht ist zu sehen, dass sich am Boden des Wassersammelbehälters 2 eine Wechselanzeige 7 befindet, welche als abnehmbares Modul ausgestaltet ist.

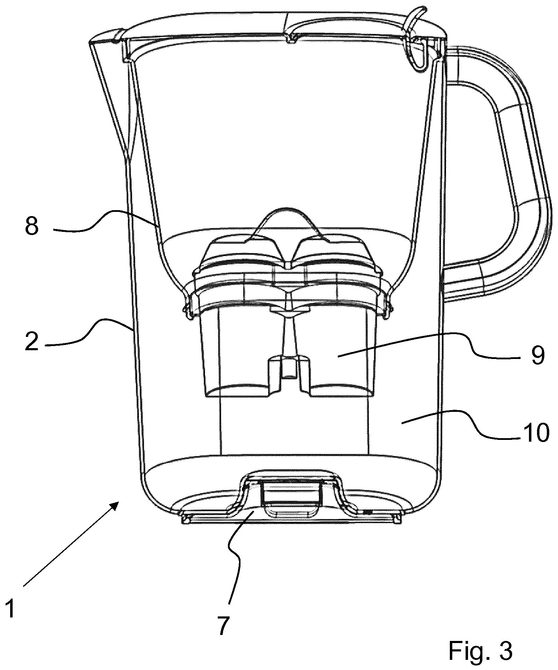

In der Schnittansicht gemäß Fig. 3 ist der Aufbau des Tischwasserfilters 1 zu erkennen.

In dieser Ausführungsform ist ein Trichter 8 in den Wassersammelbehälter 2 eingesetzt.

In den Trichter 8 kann aufzubereitendes Wasser eingefüllt werden, welches sodann durch die in den Trichter 8 eingesetzte Filterkartusche 9 fließt und sich im Wassersammelraum 10 sammelt.

Bei einer anderen, hier nicht dargestellten Ausführungsform kann sich der Trichter 8 auch über dem Wassersammelbehälter 2 befinden, so dass Trichter 8 und Wassersammelbehälter 2 separate Komponenten sind, welche bestimmungsgemäß nach dem Aufbereiten des Wassers voneinander getrennt werden.

In den Boden des Wassersammelbehälters ist die als Modul ausgebildete Wechselanzeige 7 eingesetzt.

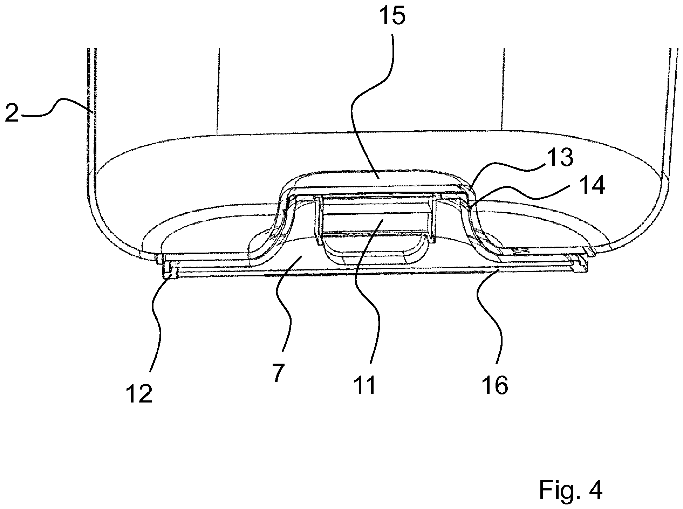

Dies ist in der Detaildarstellung gemäß Fig. 4 gut zu erkennen.

Der Boden des Wassersammelbehälters 2 umfasst eine zentral angeordnete Einsenkung 13, in welche die Wechselanzeige 7 hineinragt.

Um die Wechselanzeige 7 in der Einsenkung 13 zu verklemmen, umfasst die Einsenkung 13 eine umlaufende Nut 14. In einer anderen, hier nicht dargestellten Ausführungsform, kann auch auf die Nut verzichtet werden.

Die Wechselanzeige 7 umfasst ein Elektronikmodul 11, welches eine LED umfasst, die über die Fläche 15 der Einsenkung 13 Licht in den Innenraum des Wassersammelbehälters emittiert und so einen notwendigen Filteraustausch signalisiert.

Das Elektronikmodul 11 ragt also in die Einsenkung 13 hinein.

Ansonsten besteht die Wechselanzeige 7 aus einer Platte 16, welche im eingesetzten Zustand den Boden des Tischwasserfilters bildet und so eine Standfläche bereitstellt.

Hierzu kann, wie in diesem Ausführungsbeispiel vorgesehen, die Platte 16 mit einem umlaufenden Steg 12 versehen sein.

Zum Abnehmen der Wechselanzeige 7 kann der Nutzer die Wechselanzeige 7 an dem durch die Platte 16 gebildeten Abschnitt greifen und heraushebeln. Hierzu kann die Wechselanzeige 7 auf der Unterseite zumindest eine Ausnehmung, vorzugsweise zwei Ausnehmungen aufweisen, welche als Greifloch dient (nicht dargestellt).

Um das Herausnehmen zu erleichtern, ist der aus der Platte 16 hervortretende Vorsprung der Wechselanzeige 7 sowie auch die Einsenkung 13 randseitig abgerundet ausgebildet.

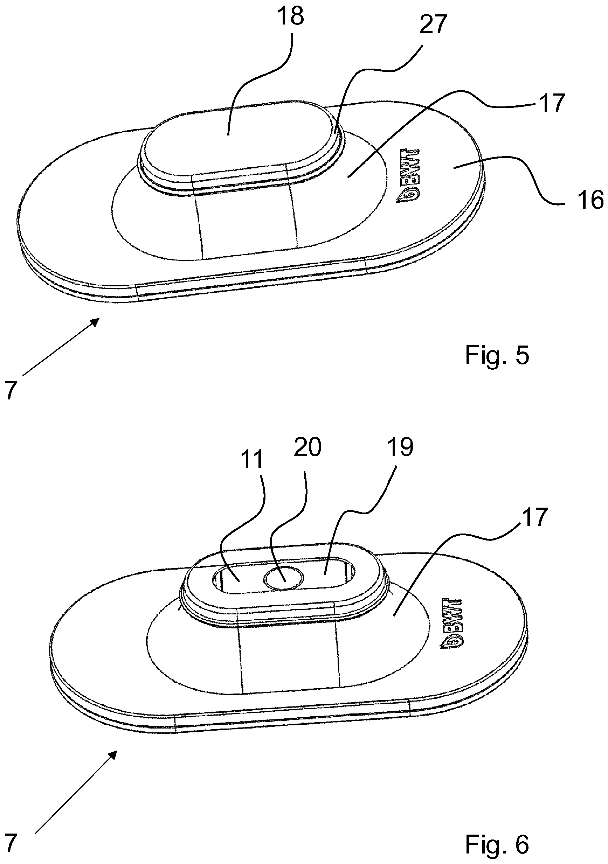

Fig. 5 ist eine perspektivische Ansicht der Wechselanzeige 7.

Die Wechselanzeige 7 umfasst die Platte 16, welche die Standfläche bereitstellt sowie den Vorsprung 17, welcher stirnseitig ein Fenster 18 aufweist, durch das Licht der Wechselanzeige austreten kann.

Das Fenster 18 kann als eigenes, selbständiges Bauteil, aber auch als integraler Bestandteil des Gehäuses ausgebildet sein.

Weiter umfasst der Vorsprung 17 einen Steg 27, der zum Festklemmen in der Einsenkung dient. Sofern der Steg 27 aus elastischem Material besteht und so einen einfedernden Kragen bildet, ist eine Verklemmung in der Einsenkung möglich, auch ohne dass diese mit einer Nut versehen ist.

Fig. 6 ist eine perspektivische Ansicht der Wechselanzeige 7, bei welcher das Fenster und darunter liegende Komponenten ausgeblendet sind, so dass der Blick auf das Elektronikmodul 11 frei ist.

Nach Abnehmen des Fensters ist eine Öffnung 19 ausgebildet, innerhalb welcher zumindest eine LED 20, insbesondere eine RGB-LED liegt.

Über die LED 20 kann Licht emittiert werden, welches einen notwendigen Austausch der Filterkartusche signalisiert.

Hierzu kann das Elektronikmodul 11 einen Beschleunigungs- bzw. Bewegungssensor umfassen, über den die LED 20 aktiviert wird, wenn der Tischwasserfilter bewegt wird.

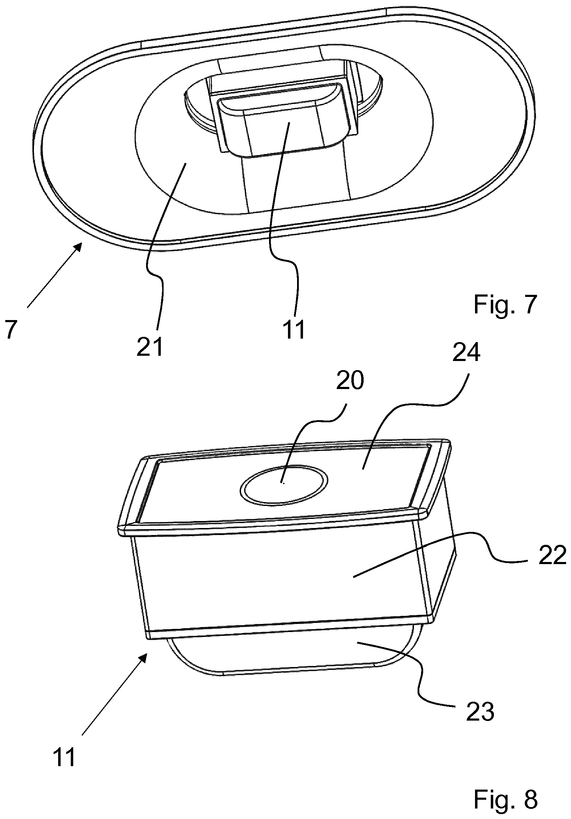

Fig. 7 zeigt die Wechselanzeige 7, wobei nunmehr der Boden der Platte ausgebildet ist.

Zu erkennen ist, dass das Elektronikmodul 11 in einem Aufnahmeraum 21, welcher durch den Vorsprung der Wechselanzeige 7 gebildet wird, untergebracht ist.

Fig. 8 ist eine perspektivische Ansicht des Elektronikmoduls 7.

Das Elektronikmodul 7 umfasst die Oberfläche 24, unter welcher die LED 20 liegt.

Das Gehäuse 22 umfasst ein Batteriefach 23.

Es ist gemäß einer Ausführungsvariante denkbar, dass der Benutzer den Boden der Wechselanzeige abnehmen und so die Batterien nach Abnahme des Batteriefachs 23 auswechseln kann.

Die Wechselanzeige ist durch Drücken auf die Stirnseite des Vorsprungs, genauer gesagt auf das Fenster (18 in Fig. 5), rücksetzbar.

Dies kann dadurch realisiert sein, dass entweder die stirnseitige Fläche 24 druckempfindlich ist oder dass das Elektronikmodul 11 einen Mikroschalter umfasst, welcher durch Drücken auf die Oberseite des Vorsprungs aktiviert wird.

Wie diese Funktionalität ausgestaltet sein kann, soll bezugnehmend auf Fig. 9 und Fig. 10 erläutert werden.

Fig. 9 zeigt, dass das Elektronikmodul 11 der Wechselanzeige zwischen dem Fenster 18 und dem Boden 25 der Wechselanzeige angeordnet ist. Drückt der Benutzer auf das Fenster 18, so biegt sich dieses durch oder federt ein, was vom Elektronikmodul 11 über eine druckempfindliche Fläche oder einen Mikroschalter erfasst werden kann.

Um Fertigungstoleranzen auszugleichen, kann, wie in Fig. 10 zu erkennen ist, zwischen dem Elektronikmodul 11 und dem Fenster 18 eine transparente Platte 26 angeordnet sein.

Die transparente Platte 26 besteht aus einem elastischen Material und bewirkt, dass Druck auf die Stirnseite des Vorsprungs an das Elektronikmodul 11 weitergeleitet wird.

Bezugnehmend auf Fig. 11 bis Fig. 14 soll ein weiteres Ausführungsbeispiel einer Wechselanzeige 7 näher erläutert werden.

Fig. 11 ist eine perspektivische Ansicht der Wechselanzeige 7.

Das Gehäuse 22 der Wechselanzeige 7 ist bei diesem Ausführungsbeispiel im Wesentlichen kreiszylindrisch ausgebildet.

Stirnseitig umfasst das Gehäuse 22 ein Fenster 18, welches als Lichtaustrittsfenster dient und welches einen notwendigen Austausch der Filterkartusche signalisiert.

Die Wechselanzeige 7 arbeitet vorzugsweise rein zeitgesteuert und signalisiert nach einem Rücksetzen nach einer auf einem Elektronikmodul abgespeicherten Zeitspanne einen notwendigen Austausch der Filterkartusche.

Das Fenster 18 ist vorzugsweise semitransparent ausgebildet. So werden zum einen darunter befindliche Elektronikbauteile verdeckt. Zum anderen wird das Fenster 18 durch eine darunterliegende Leuchteinrichtung, insbesondere eine LED derart beleuchtet, dass dieses als leuchtende Fläche erkennbar ist.

Ein notwendiger Austausch einer Filterkartusche kann durch Beleuchten des Fensters 18 oder durch Beleuchten des Fensters 18 in einer anderen Lichtfarbe signalisiert werden.

Das Gehäuse 22 umfasst des Weiteren einen Bajonette-Verschluss 29 mit den Rasthaken 28.

Die Wechselanzeige 7 wird also durch eine Steck- und Drehbewegung am Boden des Wassersammelbehälters angebracht. Im montierten Zustand verrastet die Wechselanzeige 7 verdrehgesichert, so dass diese nicht versehentlich herausfällt.

Das Fenster 18 ist gleichzeitig als Schalter zum Rücksetzen der Wechselanzeige 7 ausgebildet. Nach dem Abnehmen der Wechselanzeige 7 vom Wassersammelbehälter kann der Benutzer auf das Fenster 18 drücken und so die Wechselanzeige 7 zurücksetzen.

Vorzugsweise ist die Wechselanzeige derart ausgebildet, dass der Benutzer das Fenster für eine auf dem Elektronikmodul abgespeicherte Mindestzeit drücken muss, um die Wechselanzeige 7 zurückzusetzen. So wird das Risiko eines versehentlichen Zurücksetzens minimiert.

Fig. 12 ist eine weitere perspektivische Ansicht der Wechselanzeige 7. Zu sehen ist nunmehr die Wechselanzeige 7 von unten, also die im eingesetzten Zustand dem Benutzer zugewandte Seite der Wechselanzeige 7.

Der Boden der Wechselanzeige 7 umfasst einen Deckel 30.

Der Deckel 30 umfasst einen Schlitz 31, über den der Benutzer den Deckel drehen und ebenfalls nach dem Prinzip des Bajonette-Verschlusses abnehmen kann, um an eine darunter angeordnete Batterie (38 in Fig. 14) zu gelangen.

Fig. 13 ist eine Schnittansicht eines Tischwasserfilters 1, in dessen Boden die in Fig. 11 und 12 dargestellte Wechselanzeige 7 eingesetzt ist.

Der Tischwasserfilter 1 entspricht ansonsten dem zuvor beschriebenen Ausführungsbeispiel und umfasst insbesondere einen Trichter 8, in welchem eine Filterkartusche eingesetzt ist. Das durch die Filterkartusche gefilterte Wasser sammelt sich im Wassersammelbehälter 2.

Der Wassersammelbehälter 2 umfasst einen Boden 32 mit einer Einsenkung 13, innerhalb derer die Wechselanzeige 7 angeordnet ist.

Die Wechselanzeige 7 wird hierzu nach dem Prinzip des Bajonette-Verschlusses in korrespondierende Haltestrukturen des Bodens 32 (nicht dargestellt) eingesteckt und gedreht.

Der Boden 32 kann, wie in diesem Ausführungsbeispiel dargestellt, eine Einwölbung 33 oder Linse umfassen, über die das von der Wechselanzeige 7 durch den Boden 32 in den Wassersammelbehälter 2 abgestrahlte Licht zur Seite hin gestreut wird.

Die hier dargestellte Wechselanzeige 7 ist kompakter als die unter Bezugnahme auf Fig. 1 bis Fig. 10 dargestellte Wechselanzeige ausgebildet.

Insbesondere sitzt die Wechselanzeige 7 vollständig und beabstandet vom Boden 32 in der Einsenkung 13. Der Boden 32 des Wassersammelbehälters 2 bildet mithin die Standfläche des Tischwasserfilters 1.

Fig. 14 ist eine Explosionsdarstellung der in Fig. 11 und 12 dargestellten Wechselanzeige 1.

Das Gehäuse 22 der Wechselanzeige 7 umfasst eine Öffnung 34.

Unterhalb der Öffnung 34 ist das Fenster 18 angeordnet.

Das Fenster 18 ragt aus einer Platte 39 hervor und ist so formschlüssig in der Öffnung 34 zentriert.

Unterhalb der in das Gehäuse 22 einsetzbaren Platte 39 befindet sich das Elektronikmodul 11.

Das Elektronikmodul 11 umfasst eine Platine 35 mit zumindest einer, vorzugsweise einer Mehrzahl von LEDs, welche unter dem Fenster 18 angeordnet ist bzw. sind.

Unterhalb des Fensters 18 ist ferner ein Mikroschalter 36 angeordnet.

Drückt nunmehr der Benutzer auf das Fenster 18, so kann durch den dadurch aktivierten Mikroschalter 36 die Wechselanzeige 7 zurückgesetzt werden.

Auf der der zumindest einen LED 20 gegenüberliegenden Seite der Platine 35 befindet sich die vom Benutzer herausnehmbare Batterie 38, welche nach Abnehmen des Deckels 30 zugänglich ist.

Der Deckel 30 wird ebenfalls nach dem Prinzip des Bajonette-Verschlusses mit dem Gehäuse 22 verbunden und umfasst hierzu die randseitig angeordneten Haken 37.

Durch Einstecken und Drehen wird der Deckel 30 in dem Gehäuse 22 verriegelt.

Durch die Erfindung konnte der Komfort und die Funktionalität einer Wechselanzeige für einen Tischwasserfilter verbessert werden.

### Bezugszeichenliste

- 1: Tischwasserfilter
- 2: Wassersammelbehälter
- 3: Griff
- 4: Deckel
- 5: Klappe
- 6: Ausgießtülle
- 7: Wechselanzeige
- 8: Trichter
- 9: Filterkartusche
- 10: Wassersammelraum
- 11: Elektronikmodul
- 12: Steg
- 13: Einsenkung
- 14: Nut
- 15: Fläche
- 16: Platte
- 17: Vorsprung
- 18: Fenster
- 19: Öffnung
- 20: LED
- 21: Aufnahmeraum
- 22: Gehäuse
- 23: Batteriefach
- 24: Oberfläche
- 25: Boden
- 26: Platte
- 27: Steg
- 28: Rasthaken
- 29: Bajonette-Verschluss
- 30: Deckel
- 31: Schlitz
- 32: Boden des Wassersammelbehälters
- 33: Einwölbung
- 34: Öffnung
- 35: Platine
- 36: Mikroschalter
- 37: Haken
- 38: Batterie
- 39: Platte

## Patentansprüche

1. Tischwasserfilter (1), umfassend einen Wassersammelbehälter (2), eine Filterkartusche (9) sowie eine Wechselanzeige (7), die einen notwendigen Austausch der Filterkartusche (9) signalisiert, **dadurch gekennzeichnet, dass** die Wechselanzeige (7) lösbar am Boden (25) des Wassersammelbehälters (2) befestigt ist, wobei die Wechselanzeige (7) als von dem Wassersammelbehälter (2) abnehmbares Modul ausgebildet ist, welches in der Boden (25) des Wassersammelbehälters (2) eingeclipst ist.

2. Tischwasserfilter (1) nach dem vorstehenden Anspruch, **dadurch gekennzeichnet, dass** die Wechselanzeige (7) am Boden (25) des Wassersammelbehälters (2) festgeklemmt ist.

3. Tischwasserfilter (1) nach einem der vorstehenden Ansprüche, **dadurch gekennzeichnet, dass** die Wechselanzeige (7) mittels eines Bajonettverschlusses (29)in den Boden (25) des Wassersammelbehälter (2) eingeclipst ist.

4. Tischwasserfilter (1) nach einem der vorstehenden Ansprüche, **dadurch gekennzeichnet, dass** die Wechselanzeige (7) ein Fenster (18) umfasst, aus welchem Licht in den Wassersammelbehälter (2) emittiert wird.

5. Tischwasserfilter (1) nach dem vorstehenden Anspruch, **dadurch gekennzeichnet, dass** das Fenster (18) als Schalter zum Rücksetzen der Wechselanzeige (7) ausgebildet ist.

6. Tischwasserfilter (1) nach einem der vorstehenden Ansprüche, **dadurch gekennzeichnet, dass** der Boden (25) des Wassersammelbehälters (2) eine Einsenkung (13) aufweist, in welche die Wechselanzeige (7) zumindest abschnittsweise hineinragt.

7. Tischwasserfilter (1) nach dem vorstehenden Anspruch, **dadurch gekennzeichnet, dass** die Wechselanzeige (7) in der Einsenkung (13) festgeklemmt ist.

8. Tischwasserfilter (1) nach einem der vorstehenden Ansprüche, **dadurch gekennzeichnet, dass** die Wechselanzeige (7) die Standfläche des Tischwasserfilters (1) umfasst.

9. Tischwasserfilter (1) nach einem der vorstehenden Ansprüche, **dadurch gekennzeichnet, dass** die Wechselanzeige (7) als geschlossenes Modul ausgebildet ist.

10. Tischwasserfilter (1) nach einem der vorstehenden Ansprüche, **dadurch gekennzeichnet, dass** die Wechselanzeige (7) einen in eine Einbuchtung des Bodens (25) ragenden Vorsprung (17) umfasst, welche eine optische Anzeige, insbesondere eine LED-Anzeige umfasst.

11. Tischwasserfilter (1) nach einem der vorstehenden Ansprüche, **dadurch gekennzeichnet, dass** die Wechselanzeige (7) einen Bewegungssensor umfasst, mittels dessen eine optische Anzeige aktivierbar ist.

## Claims

1. A table-top water filter (1), comprising a water collection container (2), a filter cartridge (9) and a change indicator (7) which signals a necessary replacement of the filter cartridge (9), **characterized in that** the change indicator (7) is detachably secured on the bottom (25) of the water collection container (2), wherein the change indicator (7) is designed as a module which can be removed from the water collection container (2) and which is clipped into the bottom (25) of the water collection container (2).

2. The table-top water filter (1) according to the preceding claim, **characterized in that** the change indicator (7) is clamped to the bottom (25) of the water collection container (2).

3. The table-top water filter (1) according to any one of the preceding claims, **characterized in that** the change indicator (7) is clipped into the bottom (25) of the water collection container (2) by means of a bayonet closure (29).

4. The table-top water filter (1) according to any one of the preceding claims, **characterized in that** the change indicator (7) comprises a window (18) from which light is emitted into the water collection container (2).

5. The table-top water filter (1) according to the preceding claim, **characterized in that** the window (18) is designed as a switch for resetting the change indicator (7).

6. The table-top water filter (1) according to any one of the preceding claims, **characterized in that** the bottom (25) of the water collection container (2) has a depression (13) into which the change indicator (7) projects, at least sections thereof.

7. The table-top water filter (1) according to the preceding claim, **characterized in that** the change indicator (7) is clamped in said depression (13).

8. The table-top water filter (1) according to any one of the preceding claims, **characterized in that** the change indicator (7) comprises the base of the table-top water filter (1).

9. The table-top water filter (1) according to any one of the preceding claims, **characterized in that** the change indicator (7) is designed as a closed module.

10. The table-top water filter (1) according to any one of the preceding claims, **characterized in that** the change indicator (7) comprises a projection (17) which projects into a recess in the bottom (25) and which comprises a visual indicator, in particular an LED indicator.

11. The table-top water filter (1) according to any one of the preceding claims, **characterized in that** the change indicator (7) comprises a motion sensor which allows to activate a visual indicator.

## Revendications

1. Carafe filtrante (1), comprenant un récipient de collecte d'eau (2), une cartouche filtrante (9) et un indicateur de changement (7), qui signale un remplacement nécessaire de la cartouche filtrante (9), **caractérisé en ce que** l'indicateur de changement (7) est fixé de manière amovible au fond (25) du récipient de collecte d'eau (2), l'indicateur de changement (7) étant conçu comme un module qui peut être retiré du récipient de collecte d'eau (2) et qui est clipsé dans le fond (25) du récipient de collecte d'eau (2).

2. Carafe filtrante (1) selon la revendication précédente, **caractérisé en ce que** l'indicateur de changement (7) est pincé au fond (25) du récipient de collecte d'eau (2).

3. Carafe filtrante (1) selon l'une quelconque des revendications précédentes, **caractérisé en ce que** l'indicateur de changement (7) est clipsé dans le fond (25) du récipient de collecte d'eau (2) au moyen d'une fermeture à baïonnette (29).

4. Carafe filtrante (1) selon l'une quelconque des revendications précédentes, **caractérisé en ce que** l'indicateur de changement (7) comprend une fenêtre (18) à partir de laquelle de la lumière est émise dans le récipient de collecte d'eau (2).

5. Carafe filtrante (1) selon la revendication précédente, **caractérisé en ce que** la fenêtre (18) est conçue comme un interrupteur pour réinitialiser l'indicateur de changement (7).

6. Carafe filtrante (1) selon l'une quelconque des revendications précédentes, **caractérisé en ce que** le fond (25) du récipient de collecte d'eau (2) présente un évidement (13) dans laquelle fait saillie, au moins par sections, l'indicateur de changement (7).

7. Carafe filtrante (1) selon la revendication précédente, **caractérisé en ce que** l'indicateur de changement (7) est serré dans ledit évidement (13).

8. Carafe filtrante (1) selon l'une quelconque des revendications précédentes, **caractérisé en ce que** l'indicateur de changement (7) comprend la base de la carafe filtrante (1).

9. Carafe filtrante (1) selon l'une quelconque des revendications précédentes, **caractérisé en ce que** l'indicateur de changement (7) est conçu sous la forme d'un module fermé.

10. Carafe filtrante (1) selon l'une quelconque des revendications précédentes, **caractérisé en ce que** l'indicateur de changement (7) comprend une saillie (17) qui fait saillie dans un évidement du fond (25) et qui comprend un indicateur visuel, en particulier un indicateur LED.

11. Carafe filtrante (1) selon l'une quelconque des revendications précédentes, **caractérisé en ce que** l'indicateur de changement (7) comprend un capteur de mouvement qui permet d'activer un indicateur visuel.
